# EUROPEAN PATENT APPLICATION

(11) **EP 4 236 294 A1**
(43) Date of publication of application: **30.08.2023**
(21) Application number: 21912738.8
(22) Date of filing: 23.04.2021
(51) Int. Cl.: H04N 5/225

(54) **CAMERA MODULE HOUSING STRUCTURE AND CAMERA MODULE**

(30) Priority: 04.01.2021 CN 202110004210
(71) Applicant: Zhejiang Sunny Smartlead Technologies Co., Ltd., Yuyao, Zheijiang 315400 (CN)
(72) Inventor: NONG, Kaixun, Yuyao, Zhejiang 315400 (CN); XUE, Dijun, Yuyao, Zhejiang 315400 (CN); XU, Yi, Yuyao, Zhejiang 315400 (CN); ZHANG, Kouwen, Yuyao, Zhejiang 315400 (CN)
(74) Representative: Lermer, Christoph
(86) International application number: PCT/CN2021/089401
(87) International publication number: WO 2022/141974

(57) **Abstract**

The present invention relates to a camera module housing structure and a camera module comprising same. The camera module housing structure comprises an upper housing (1) and a lower housing (2); the upper housing (1) and the lower housing (2) are at least locally welded and fixedly connected; a welding structure (3) is formed at a local welding position; a sealing ring (4) is further provided between the upper housing (1) and the lower housing (2); the sealing ring (4) is located on the inner side of the welding structure (3). The camera module housing structure of the present invention has a large internal space and is good in connection firmness, and the loosening risk existing in screw locking can be effectively avoided. Furthermore, the sealing requirement is satisfied by using the sealing ring and the local welding mode, and compared with the whole-circle welding sealing scheme in the prior art, the welding quality requirement is low, a welding line is short, the welding operation difficulty is low, and the product yield is increased.

## Description

### CROSS-REFERENCE TO RELATED APPLICATIONS

The present application claims priority to Chinese patent application No. 202110004210.8, titled "CAMERA MODULE HOUSING STRUCTURE AND CAMERA MODULE", filed with the Chinese National Intellectual Property Administration on January 4, 2021, the entire disclosure of which is incorporated herein by reference.

### FIELD OF THE INVENTION

The present disclosure relates to the technical field of optical system and device design, and in particular to a camera module housing structure and a camera module.

### BACKGROUND

With the rapid development of automotive industry, the application technology of on-vehicle cameras is becoming increasingly mature. As an advanced driving assistance system in which the cameras are used for cooperation with the automobile, it has very high requirements on the sealing performance of camera modules, and the miniaturization requirement on the camera modules is also becoming higher and higher. For some modules with high heat dissipation requirements, metal housings are used. For current metal housings, they are usually sealed by sealing rings and fixed by screw locking, or the housings are welded all around for sealing and fixing.

The above fixing methods mainly have the following defects: when an internal space of the housing is fixed, the fixing method of screw locking has a space occupation problem; whereas the method of sealing by welding the housing all around has high requirements on welding quality, and the welding line is long, resulting in a reduction in product yield.

### SUMMARY OF THE INVENTION

An object of the present disclosure is to solve the above problems by providing a camera module housing structure and a camera module, so as to solve the space occupation problem of the existing housing structure locked by screws and the problem of reduced product yield caused by all-around welding.

In order to achieve the object of the present disclosure, the present disclosure provides a camera module housing structure, which includes an upper housing and a lower housing, the upper housing and the lower housing being at least partially welded and fixedly connected, and a welding structure being formed at the partial welding position; and
a sealing ring is further provided between the upper housing and the lower housing, and the sealing ring is located on an inner side of the welding structure.

According to an aspect of the present disclosure, there are at least two said welding structures provided.

According to an aspect of the present disclosure, there are two said welding structures provided, and the two welding structures are arranged diagonally or on opposite sides.

According to an aspect of the present disclosure, there are four said welding structures provided, which are respectively arranged at four corners of the upper housing and the lower housing.

According to an aspect of the present disclosure, there are four said welding structures provided, which are respectively arranged at midpoints of four sides of the upper housing and the lower housing.

According to an aspect of the present disclosure, the welding structure includes a first welding portion and a second welding portion, the first welding portion is a boss arranged on the upper housing, and the second welding portion is a limit groove arranged on the lower housing and matching the boss.

According to an aspect of the present disclosure, the boss and the limit groove are welded and fixed at a side face and/or an end of the boss that faces the lower housing is welded and fixed to the limit groove.

According to an aspect of the present disclosure, the welding structure includes a first welding portion and a second welding portion, which are outer edges of the upper housing and the lower housing respectively, a welding seam is provided between the first welding portion and the second welding portion, and the first welding portion and the second welding portion are welded through the welding seam.

According to an aspect of the present disclosure, the welding structure includes a first welding portion and a second welding portion, which are outer edges of the upper housing and the lower housing respectively, a welding seam is provided between the first welding portion and the second welding portion, and steps facing the outside are symmetrically arranged on the first welding portion and the second welding portion.

According to an aspect of the present disclosure, the welding structure includes a first welding portion and a second welding portion, which are outer edges of the upper housing and the lower housing respectively, the first welding portion and the second welding portion are respectively provided with a protrusion and a groove that match each other, and step portions are correspondingly arranged on outer sides of the protrusion and the groove.

According to an aspect of the present disclosure, the upper housing and the lower housing are welded by laser welding, ultrasonic welding, or cold welding.

The present disclosure also provides a camera module including the camera module housing structure described above, as well as a lens connected to the upper housing and a circuit board arranged in the lower housing.

In the camera module housing structure of the present disclosure, the upper housing and the lower housing are at least partially welded and fixedly connected. As compared to the screw locking connection method in the prior art, the connection is firm, the risk of loosening of screw locking can be effectively avoided, and at the same time, the space occupation problem of screw locking can be solved.

The camera module housing structure of the present disclosure further includes a sealing ring. In the present disclosure, the sealing ring is arranged between the upper housing and the lower housing, and is located on the inner side of the welding structure. With such an arrangement, the camera module housing structure of the present disclosure can achieve sealing requirements by using the sealing ring and partial welding. As compared to the solution of all-around welding and sealing in the prior art, the welding quality requirements are low, and the welding line is short, which is advantageous for improving the product yield.

In the camera module housing structure of the present disclosure, since the boss is arranged on a side of the upper housing that faces the lower housing, after the boss is welded and fixed with the limit groove of the lower housing, no welding points will be visible from the front end (the end of the upper housing) of the camera module housing structure, so that the appearance of the camera module housing structure will not be affected.

### BRIEF DESCRIPTION OF THE DRAWINGS

FIG. 1 schematically shows a perspective view of a camera module housing structure according to an embodiment of the present disclosure;
FIG. 2 schematically shows a first view of the housing structure in the prior art;
FIG. 3 schematically shows a second view of the housing structure in the prior art;
FIG. 4 schematically shows a top view of an upper housing according to an embodiment of the present disclosure;
FIG. 5 schematically shows a structural view of a lower housing according to an embodiment of the present disclosure;
FIG. 6 schematically illustrates an embodiment of a welding structure according to the present disclosure;
FIG. 7 schematically illustrates a second embodiment of the welding structure according to the present disclosure;
FIG. 8 schematically illustrates a third embodiment of the welding structure according to the present disclosure;
FIG. 9 schematically shows a connection view between a boss and the lower housing according to an embodiment of the present disclosure;
FIG. 10 schematically shows a connection view between the boss and the lower housing according to a second embodiment of the present disclosure;
FIG. 11 schematically shows a connection view between the boss and the lower housing according to a third embodiment of the present disclosure;
FIG. 12 schematically shows a view of the welding structure according to a second embodiment of the present disclosure;
FIG. 13 schematically shows a view of the welding structure according to a third embodiment of the present disclosure;
FIG. 14 schematically shows a view of the welding structure according to a fourth embodiment of the present disclosure;
FIG. 15 schematically shows a view of the welding structure according to a fifth embodiment of the present disclosure;
FIG. 16 schematically shows a view of the welding structure according to a sixth embodiment of the present disclosure;
FIG. 17 schematically shows a view of the welding structure according to a seventh embodiment of the present disclosure; and
FIG. 18 schematically shows a cross-sectional view of a camera module according to an embodiment of the present disclosure.

### DETAILED DESCRIPTION OF THE INVENTION

In order to more clearly illustrate the embodiments of the present disclosure or the technical solutions in the prior art, drawings required to be used in the embodiments will be briefly described below. Obviously, the drawings in the following description show only some of the embodiments of the present disclosure, and those skilled in the art can also obtain other drawings based on these drawings without creative efforts.

The present disclosure will be described in detail below with reference to the drawings and specific embodiments. It is impossible to describe all the embodiments exhaustively herein, but the embodiments of the present disclosure are not limited to the following embodiments.

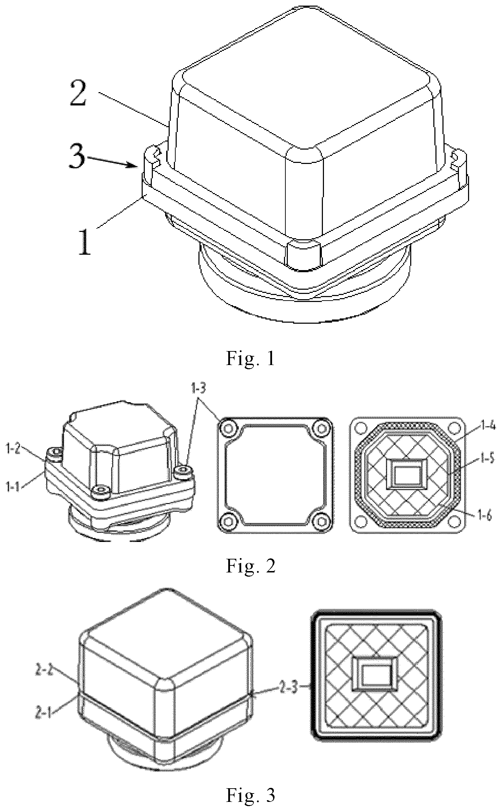

As shown in FIG. 2, a traditional metal housing is fixed by screws. Reference number 1-3 indicates screws that fix an upper housing 1-1 with a lower housing 1-2, and reference number 1-4 indicates a sealing ring. Due to the existence of the screws, a circuit board 1-5 inside the housing will be cut away to make room for a space, as shown by reference number 1-6, so that the utilization area of the circuit board will be reduced.

As shown in FIG. 3, as to a second type of metal housing in the prior art, it is welded all around for sealing and fixing. Reference number 2-1 indicates the upper housing, reference number 2-2 indicates the lower housing, and reference number 2-3 indicates the welding of a gap between the upper housing and the lower housing. The welding line is very long, requiring high welding quality for sealing.

In order to solve the above defects of the housings in the prior art, the present disclosure proposes a camera module housing structure. As shown in FIGS. 1, 4 and 5, the camera module housing structure of the present disclosure includes an upper housing 1 and a lower housing 2. The upper housing 1 and the lower housing 2 are at least partially welded and fixed, and a welding structure is formed at the welding position.

In the camera module housing structure of the present disclosure, the upper housing 1 and the lower housing 2 are connected by partial welding and fixing. As compared to the screw locking connection method in the prior art, the connection is firm, the risk of loosening of screw locking can be effectively avoided, and at the same time, the space occupation problem of screw locking can be solved.

In addition, the camera module housing structure of the present disclosure further includes a sealing ring 4. In the present disclosure, the sealing ring 3 is arranged between the upper housing 1 and the lower housing 2, and is located on the inner side of the welding structure. With such an arrangement, the camera module housing structure of the present disclosure can achieve sealing requirements by using the sealing ring 4 and partial welding. As compared to the solution of all-around welding and sealing in the prior art, the welding quality requirements are low, and the welding line is short, which is advantageous for improving the product yield.

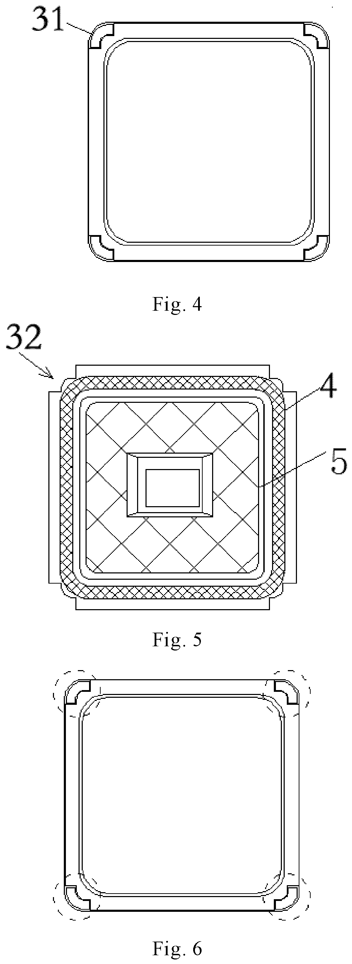

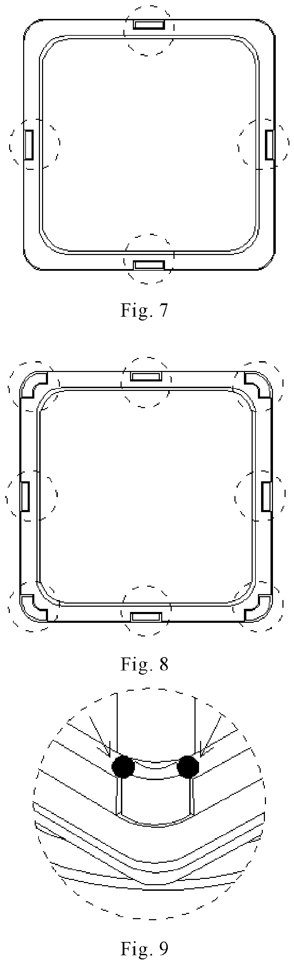

According to the concept of the present disclosure, there are at least two said welding structures 3 of the present disclosure provided. Taking a square housing as an example, the two welding structures 3 are preferably arranged diagonally or on opposite sides, which is advantageous for ensuring welding firmness. As shown in FIGS. 6-7, there can also be four said welding structures 3 of the present disclosure provided, which are respectively arranged at four corners of the housings, or at midpoints of four sides of the housings. Of course, the number of the welding structures 3 provided can be even larger; for example, as shown in FIG. 8, the welding structures 3 are arranged at both the four corners and the midpoints of four sides of the housings.

As shown in FIGS. 1, 4, and 5, according to an embodiment of the present disclosure, the welding structure 3 of the present disclosure includes a first welding portion 31 and a second welding portion 32. In this embodiment, the first welding portion 31 is a boss provided on an edge of the upper housing 1 on a side facing the lower housing 2. The second welding portion 32 is a limit groove arranged on the lower housing 2 and matching the shape of the boss. The boss is connected to the limit groove by welding.

In this embodiment, since the boss is arranged on a side of the upper housing 1 that faces the lower housing 2, after the boss is welded and fixed with the limit groove of the lower housing 2, no welding points will be visible from the front end (the end of the upper housing) of the camera module housing structure, so that the appearance of the camera module housing structure will not be affected.

According to an embodiment of the present disclosure, the boss and the upper housing 1 are separate members that are fixed by bonding or welding. According to a second embodiment of the present disclosure, the boss and the upper housing 1 can be integrally formed.

As shown in FIGS. 9 to 11, black circles in the figures represent welding position points. According to the concept of the present disclosure, the boss and the limit groove can be welded and fixed at a side face, or an end of the boss that faces the lower housing 2 is welded and fixed to the limit groove; alternatively, an end of the boss that faces the lower housing 2 is welded and fixed to the limit groove, and at the same time, the boss and the limit groove are welded and fixed at a side face. The specific arrangement can be chosen according to actual needs.

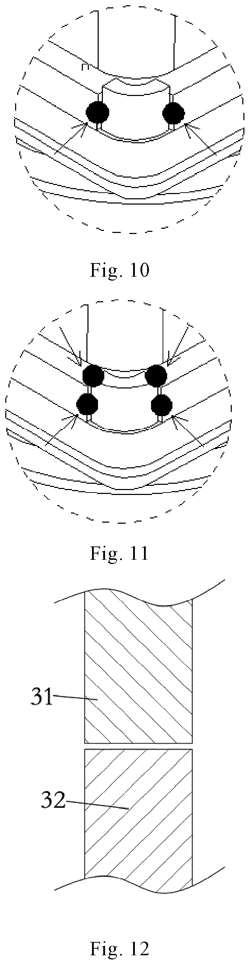

As shown in FIG. 12, according to the second embodiment of the present disclosure, the first welding portion 31 and the second welding portion 32 of the welding structure 3 of the present disclosure are outer edges of the upper housing 1 and the lower housing 2 respectively. A welding seam is provided between the first welding portion 31 and the second welding portion 32, and the first welding portion 31 and the second welding portion 32 are welded and fixed through the welding seam to achieve a fixed connection between the upper housing 1 and the lower housing 2.

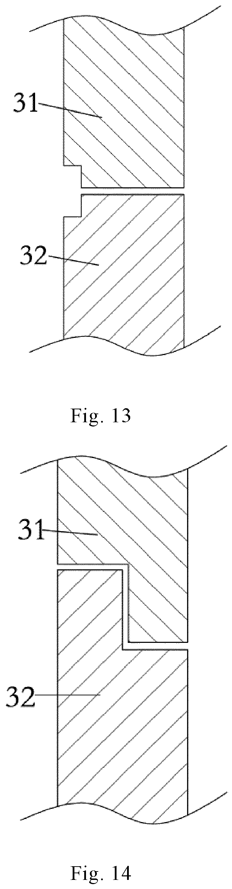

As shown in FIG. 13, according to a third embodiment of the present disclosure, the first welding portion 31 and the second welding portion 32 of the welding structure 3 of the present disclosure are outer edges of the upper housing 1 and the lower housing 2 respectively. A welding seam is provided between the first welding portion 31 and the second welding portion 32, and at the same time, steps facing the outside can also be symmetrically arranged on the first welding portion 31 and the second welding portion 32.

As shown in FIG. 14, according to a fourth embodiment of the present disclosure, the first welding portion 31 and the second welding portion 32 of the welding structure 3 of the present disclosure are outer edges of the upper housing 1 and the lower housing 2 respectively. The first welding portion 31 and the second welding portion 32 are provided as step structures that match in shape, and a Z-shaped welding seam is formed between the first welding portion 31 and the second welding portion 32.

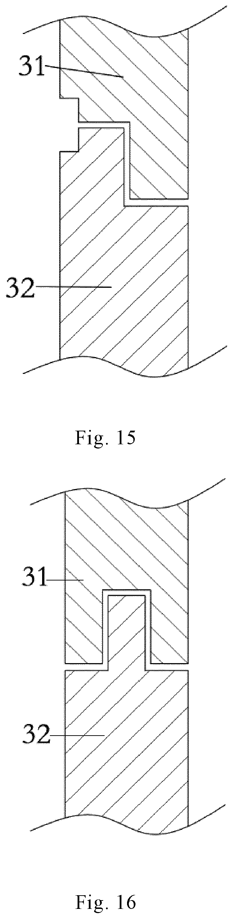

As shown in FIG. 15, according to a fifth embodiment of the present disclosure, on the basis of the embodiment shown in FIG. 14, the outer sides of the first welding portion 31 and the second welding portion 32 are further provided with corresponding step portions.

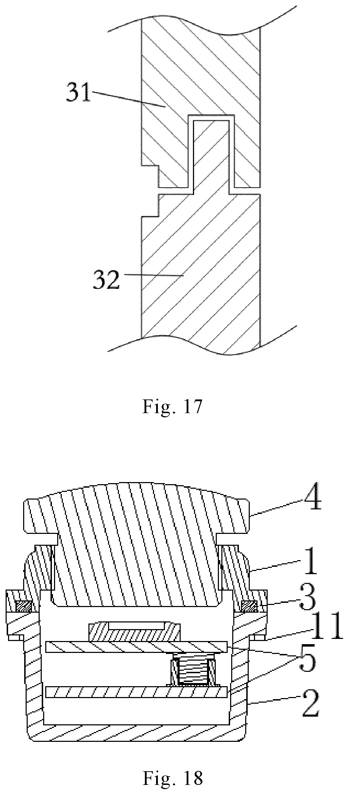

As shown in FIG. 16, according to a sixth embodiment of the present disclosure, the first welding portion 31 and the second welding portion 32 are provided as protrusion and groove structures that match in shape, which are located at middle positions of the upper housing 1 and the lower housing 2 respectively. As shown in FIG. 17, according to a seventh embodiment of the present disclosure, on the basis of the embodiment shown in FIG. 16, step portions can be further provided on the outer sides of the protrusion and groove.

As shown in FIG. 18, the present disclosure also provides a camera module including the camera module housing structure described above, and the camera module includes a lens 4 connected to the upper housing 1 and a circuit board 5 arranged in the lower housing 2. In this embodiment, there are two circuit boards 5 provided.

Described above is only one embodiment of the present disclosure, which is not intended to limit the present disclosure. For those skilled in the art, various modifications and changes can be made to the present disclosure. Any modification, equivalent substitution, improvement or the like made within the spirit and principle of the present disclosure are intended to be included in the scope of protection of the present disclosure.

## Claims

1. A camera module housing structure, comprising an upper housing (1) and a lower housing (2), wherein the upper housing (1) and the lower housing (2) are at least partially welded and fixedly connected, and a welding structure (3) is formed at the partial welding position; and
a sealing ring (4) is further provided between the upper housing (1) and the lower housing (2), and the sealing ring (3) is located on an inner side of the welding structure (3).

2. The camera module housing structure according to claim 1, wherein there are at least two said welding structures (3) provided.

3. The camera module housing structure according to claim 2, wherein there are two said welding structures (3) provided, and the two welding structures (3) are arranged diagonally or on opposite sides.

4. The camera module housing structure according to claim 2, wherein there are four said welding structures (3) provided, which are respectively arranged at four corners of the upper housing (1) and the lower housing (2).

5. The camera module housing structure according to claim 2, wherein there are four said welding structures (3) provided, which are respectively arranged at midpoints of four sides of the upper housing (1) and the lower housing (2).

6. The camera module housing structure according to any one of claims 1 to 5, wherein the welding structure (3) comprises a first welding portion (31) and a second welding portion (32), the first welding portion (31) is a boss arranged on the upper housing (1), and the second welding portion (32) is a limit groove arranged on the lower housing (2) and matching the boss.

7. The camera module housing structure according to claim 6, wherein the boss and the limit groove are welded and fixed at a side face and/or an end of the boss that faces the lower housing (2) is welded and fixed to the limit groove.

8. The camera module housing structure according to any one of claims 1 to 5, wherein the welding structure (3) comprises a first welding portion (31) and a second welding portion (32), which are outer edges of the upper housing (1) and the lower housing (2) respectively, a welding seam is provided between the first welding portion (31) and the second welding portion (32), and the first welding portion (31) and the second welding portion (32) are welded through the welding seam.

9. The camera module housing structure according to any one of claims 1 to 5, wherein the welding structure (3) comprises a first welding portion (31) and a second welding portion (32), which are outer edges of the upper housing (1) and the lower housing (2) respectively, a welding seam is provided between the first welding portion (31) and the second welding portion (32), and steps facing the outside are symmetrically arranged on the first welding portion (31) and the second welding portion (32).

10. The camera module housing structure according to any one of claims 1 to 5, wherein the welding structure (3) comprises a first welding portion (31) and a second welding portion (32), which are outer edges of the upper housing (1) and the lower housing (2) respectively, the first welding portion (31) and the second welding portion (32) are respectively provided with a protrusion and a groove that match each other, and step portions are correspondingly arranged on outer sides of the protrusion and the groove.

11. The camera module housing structure according to claim 1, wherein the upper housing (1) and the lower housing (2) are welded by laser welding, ultrasonic welding, or cold welding.

12. A camera module comprising the camera module housing structure according to any one of claims 1 to 11, wherein the camera module further comprises a lens (4) connected to the upper housing (1) and a circuit board (5) arranged in the lower housing (2).
